# EUROPÄISCHE PATENTSCHRIFT

(11) **EP 4 308 883 B1**
(45) Veröffentlichungstag und Bekanntmachung des Hinweises auf die Patenterteilung: **26.11.2025**
(21) Anmeldenummer: 22710366.0
(22) Anmeldetag: 02.03.2022
(51) Int. Cl.: G01D 5/241, G01D 5/24

(54) **POSITIONSERFASSUNG FÜR EINEN DREHWINKELSENSOR**
POSITION SENSING FOR A ROTATIONAL ANGLE SENSOR
DÉTECTION DE POSITION POUR UN CAPTEUR D'ANGLE DE ROTATION

(30) Priorität: 19.03.2021 DE 102021106879
(43) Veröffentlichungstag der Anmeldung: 24.01.2024
(73) Patentinhaber: HELLA GmbH & Co. KGaA, 59552 Lippstadt (DE)
(72) Erfinder: ABOU-CHAHINE, Zeid, 59558 Lippstadt (DE); IRLE, Henning, 59557 Lippstadt (DE)
(74) Vertreter: Behr-Wenning, Gregor
(86) Internationale Anmeldenummer: PCT/EP2022/055261
(87) Internationale Veröffentlichungsnummer: WO 2022/194553

(56) Entgegenhaltungen:
- WO-A1-2019/185336
- DE-A1- 102008 057 416
- DE-A1- 102018 204 901
- US-A1- 2010 033 064
- BRANDSTATTER B ET AL: "Simulation and Robustness Analysis for a Novel Capacitive/Magnetic Full-Turn Absolute Angular Position Sensor", IEEE TRANSACTIONS ON INSTRUMENTATION AND MEASUREMENT, IEEE, USA, vol. 54, no. 1, 1 February 2005 (2005-02-01), pages 436 - 441, XP011125286, ISSN: 0018-9456, DOI: 10.1109/TIM.2004.840246

## Beschreibung

Die vorliegende Erfindung betrifft eine Positionserfassungsvorrichtung für einen Drehwinkelsensor, einen Drehwinkelsensor mit einer derartigen Positionserfassungsvorrichtung sowie ein System mit einem solchen Drehwinkelsensor.

Drehwinkelsensoren werden z.B. in Kraftfahrzeugen eingesetzt. Zum Beispiel werden in Kraftfahrzeugen vermehrt elektromotorische Servoeinrichtungen zur Lenkhilfe eingesetzt. Diese benötigen das Lenkmoment zur Steuerung. Die Lenkmomente werden in einer Lenksäule durch einen Torsionsstab in Differenzwinkeln erkennbar und aus diesen berechnet. Genauer gesagt werden Verdrehungen an Enden des Torsionsstabs mittels Drehwinkelsensoren bestimmt und daraus Differenzwinkel abgeleitet. Die Differenzwinkel, die durch die Torsion bewirkt werden, sind unabhängig von einer Stellung des Lenkrads zu bestimmen. In heutigen elektrischen Servolenkungen werden als Mensch-Maschine-Schnittstelle, auch **HMI** (Human-Maschine-Interface) genannt, Drehmomentsensoren eingesetzt. Hierüber wird die "Kraft", die der Fahrer auf das Lenkrad aufbringt, gemessen, so dass eine Lenkunterstützung erfolgen kann. Auch zukünftig, bei Entfall der Lenksäule und dem Etablieren der so genannten Steer-by-Wire Systeme, werden Sensoren für Lenkwinkel und ggf. Lenkmoment an der Antriebseinheit der Lenkung oder dem "Hand Wheel Sensor & Actuator" notwendig sein.

Ferner ist es z.B. für Fahrerassistenzsysteme wie ESP (elektronisches Stabilitätsprogramm für das Fahrverhalten des Fahrzeugs) von Bedeutung, die Stellung (relative Winkelposition) des Lenkrads zu kennen. Hierfür wird ein Einschlag des Lenkrads (Winkel relativ zu einer Referenzposition) bestimmt. Damit auch Winkel größer oder kleiner als 360° bestimmt werden können, ist der Referenzposition eine Indexierung zugeordnet.

Bei magnetischen Drehmomentsensoren ist es beispielsweise bekannt, zur Indexierung mittels eines Hallsensors und eines zugeordneten Magneten für jede vollständige Umdrehung des Lenkrads ein Signal zu erzeugen und so eine Anzahl an Umdrehungen zu bestimmen. Verwendet wird hierbei ein oft als magnetische Jalousie bezeichnetes Verfahren, bei dem eine Änderung der magnetischen Flussdichte bei der Verdrehung erfolgt. Zugehörige Sensoren werden auch als Torque Only Sensoren (TOS) bezeichnet. Diese Sensoren sind nicht in der Lage einen Lenkwinkel zu erfassen. Beispiele für solche Drehmomentsensoren werden in der EP 1 269 133 B1 und der US 7,644,635 B2 beschrieben.

Derartige Vorrichtungen zur Bestimmung eines Drehwinkels und/oder eines Drehmoments eines sich drehenden Teils sowie Verfahren zu deren Betrieb sind aus dem Stand der Technik in zahlreichen Ausführungsvarianten bereits bekannt. Generell sind Sensoren bekannt, die sowohl das Drehmoment am Lenkrad als auch den Lenkwinkel messen.

Aus der DE 10 2004 019 379 A1 ist ein Verfahren zum Ermitteln eines Differenzwinkels bekannt, bei dem zwei Drehwinkel bestimmt und hieraus ein Differenzwinkel berechnet wird. Beim Berechnen des Differenzwinkels werden unterschiedliche Übersetzungsverhältnisse zwischen den Drehungen zweier Komponenten berücksichtigt. Eine Vielzahl von Umdrehungen bleibt unberücksichtigt.

Aus der EP 2 383 558 A1 ist ein induktiver Winkelsensor zur Bestimmung von Drehmoment und relativer Winkelstellung bezüglich einer Referenzposition, umfassend Mittel zum Erfassen von Winkeln und Differenzwinkeln sowie Mittel zum Indexieren bei Durchfahren der Referenzposition mit einem Dauermagneten und einem Hall-Sensor bekannt. Um einen preiswert und kompakt herstellbaren Drehmomentsensor mit Winkelbestimmung und Indexierung zu schaffen, wird dem Hall-Sensor ein Flussleitblech zugeordnet, das in der Referenzposition den Fluss des Dauermagneten zu dem Hall-Sensor leitet.

Aus der WO2019/185338 A1 ist eine Vorrichtung zur Bestimmung eines Drehwinkels und/oder eines Drehmoments eines sich drehenden Teils bekannt. Die Vorrichtung umfasst mindestens ein Winkelerfassungsmittel zur Erfassung einer Winkelstellung des sich drehenden Teils relativ zu einer Referenzposition und mindestens ein Indexierungsmittel zum Indexieren bei einer vorher festgelegten Drehung, bevorzugt einer 360°- Drehung, des drehenden Teils relativ zu der Referenzposition. Das Winkelerfassungsmittel weist einen mit dem drehenden Teil drehfest verbundenen Rotor mit einem Grundkörper zur Befestigung an dem drehenden Teil und mehreren sich von dem Grundkörper radial nach außen erstreckenden Flügeln auf. Mindestens einer der Flügel des Rotors weist eine mittels des Indexierungsmittels detektierbare Markierung auf.

Mit Hilfe derartiger Indexierungen ist es möglich, auf eine absolute Bestimmung des Lenkwinkels über den Messbereich von typischerweise 1440° zu verzichten. Vielmehr wird mittels der Indexierung eine Art kontaktloser Schalter hinzugefügt, der im Falle des Geradeausfahrens ein Schaltsignal (Indexsignal/Index-Signal) erzeugt. Bisherige Ausführungen des Indexschalters sind magnetisch, bedingen einen zusätzlichen Magneten und einen zusätzlichen integrierten Schaltkreis. Bezüglich der Beeinflussung durch Fremdfelder sind sie wenig robust.

Aus der DE 10 2008 057 416 A1 ist ein berührungsloser Positionssensor bekannt. Der Positionssensor weist einen Positionsaufnehmer mit Sensorleiterstrukturen und einen Positionsgeber mit Geberstrukturen auf. Die Geberstrukturen sind entlang einer Bewegungsbahn angeordnet und eine weist eine sich ändernde Leitfähigkeit auf.

Aus der US 2010 033 064 A1 ist ein *"Rotations detector and direct-current motor"* bekannt. Das Dokument offenbart ein Netzgerät welches Gleichspannung mit einer Wechselspannung überlagert und diese an einen Motor anlegt. Wenn der Motor gedreht wird, fließt ein Strom, der eine Wechselstromkomponente enthält. Der Motor enthält einen Kondensator, der parallel zu einer Phasenspule geschaltet ist. Aufgrund des Kondensators ändert sich die Impedanz des Motorstromkreises zwischen den Bürsten in Abhängigkeit von der Motordrehung. Eine Signalverarbeitungseinheit extrahiert eine Wechselstromkomponente aus dem Motorstrom deren Amplitude mit den dem Drehimpuls korrespondiert. Eine Drehwinkelerfassungseinheit erfasst den Drehwinkel des Motors auf Basis des Drehimpulses.

Aus "Simulation and Robustness Analyses for a Novel Capacitive/Magnetic Full-Turn Absolute Angular Position Sensor", Brandstatter et. al., IEEE Transactions on instrumentation and measuremen, IEEE, USA, Bd. 54, Nr.1, 1. Februar 2005, Seiten 436-441 ist eine Simulation sowie Messungen für ein Design eines *"capacitive*/*magnetic sensor with full cirlce range"* bekannt.

Aus der DE 10 2018 204 901 ist eine Sensorvorrichtung zur Erfassung eines Lageinformation eines Läufers eines Elektromotors bekannt.

In Anbetracht dessen besteht ein Bedürfnis nach einer verbesserten Technologie zur Indexierung und/oder zur Ermittlung von Drehwinkeln. Hierfür werden eine Positionserfassungsvorrichtung für einen Drehwinkelsensor nach Anspruch 1 oder 2, ein Drehwinkelsensor nach Anspruch 12 mit einer derartigen Positionserfassungsvorrichtung sowie ein System nach Anspruch 14 mit einem solchen Drehwinkelsensor angegeben. Spezifische Ausführungsbeispiele der Positionserfassungsvorrichtung ergeben sich aus den abhängigen Ansprüchen 3 bis 11.

Ein spezielles Ausführungsbeispiel des Drehwinkelsensors ergibt sich aus dem abhängigen Anspruch 13. Gemäß einem ersten Aspekt der Erfindung wird eine Positionserfassungsvorrichtung für einen Drehwinkelsensor bereitgestellt. Die Positionserfassungsvorrichtung weist mindestens einen Stator, mindestens einen Rotor und mindestens eine Auswerteeinheit auf. Der mindestens eine Rotor weist einen Grundkörper und mindestens einen sich von dem Grundkörper radial nach außen erstreckenden Rotorflügel auf. Zwischen mindestens einem ersten des mindestens einen Rotorflügels und dem mindestens einen Stator ist ein erstes Dielektrikum mit einer ersten relativen Permittivität (hierin kurz als erste Permittivität bezeichnet) vorhanden. Zwischen mindestens einem zweiten des mindestens einen Rotorflügels oder mindestens einem an den mindestens einen ersten Rotorflügel in Umfangsrichtung des Rotors angrenzenden Freiraum und dem mindestens einen Stator ist ein zweites Dielektrikum mit einer zweiten relativen Permittivität (hierin kurz als zweite Permittivität bezeichnet) vorhanden. Anders ausgedrückt, das zweite Dielektrikum ist zwischen dem mindestens einen zweiten des mindestens einen Rotorflügels und dem mindestens einen Stator oder zwischen dem mindestens einen Freiraum, der in Umfangsrichtung des Rotors an den mindestens einen ersten Rotorflügel angrenzt, und dem mindestens einen Stator vorhanden. Die erste Permittivität und die zweite Permittivität sind unterschiedlich voneinander. Die Auswerteeinheit ist ausgebildet, zu erfassen, wenn der mindestens eine erste Rotorflügel, beispielsweise ausgehend von einer Referenzposition, eine vorbestimmte Drehposition erreicht, erreicht hat oder überschreitet.

Der mindestens eine Stator kann ortsfest relativ zu einem drehenden Element angeordnet sein. Der mindestens eine Rotor kann drehfest mit dem drehenden Element verbindbar sein.

Die Auswerteeinheit kann ausgebildet sein, basierend auf einer kapazitiven Kopplung zwischen dem mindestens einen Rotor und dem mindestens einen Stator zu erfassen, wenn der mindestens eine erste Rotorflügel, ausgehend von einer Referenzposition, eine vorbestimmte Drehposition erreicht, erreicht hat oder überschreitet. Gemäß einer Ausgestaltung ist die Auswerteeinheit ausgebildet, anhand der kapazitiven Kopplung nicht den genauen Drehwinkel des mindestens einen Rotorflügels zu ermitteln, sondern zu erfassen, wenn der mindestens eine erste Rotorflügel, ausgehend von einer Referenzposition, die vorbestimmte Drehposition erreicht, erreicht hat oder überschreitet. Die vorbestimmte Drehposition kann beispielsweise eine einzige feste Position bezogen auf den Umfang des Stators und/oder des Rotors sein. Beispielsweise kann die vorbestimmte Drehposition der Referenzposition entsprechen. Gemäß diesem Beispiel kann nach jedem vollständigen Umlauf des mindestens einen ersten Rotorflügels die vorbestimmte Drehposition wieder erreicht werden. Gemäß einem anderen Beispiel kann die vorbestimmte Drehposition einem Drehwinkelsegment entsprechen. Das Drehwinkelsegment kann kleiner sein als 360° sein.

Es kann daher davon gesprochen werden, dass die Positionserfassungsvorrichtung gemäß dem ersten Aspekt kapazitiv arbeitet. Dabei fungiert der mindestens eine Rotor als mindestens eine Elektrode und fungiert der mindestens eine Stator als eine zugehörige Elektrode. Der mindestens eine Rotor und der mindestens eine Stator können dabei auf einem unterschiedlichen Potential liegen. Zwischen dem mindestens einen Rotor und dem mindestens Stator kann es dadurch zum Ausbilden eines elektrischen Feldes kommen. Die Stärke des elektrischen Feldes ist abhängig von verschiedenen Parametern. Unter anderem ist die Stärke des elektrischen Feldes zwischen dem mindestens einen Rotor und dem mindestens einen Stator von dem zwischen dem mindestens einen Rotor und dem mindestens einen Stator liegenden Material abhängig. Das Material dient dabei als Dielektrikum. Je höher die Permittivität des als Dielektrikum dienenden Materials, desto geringer ist die elektrische Feldstärke des sich ausbildenden elektrischen Feldes. Je geringer die Permittivität des als Dielektrikum dienenden Materials, desto höher ist die elektrische Feldstärke des sich ausbildenden elektrischen Feldes.

Die kapazitive Ausgestaltung der Positionserfassungsvorrichtung ist vorteilhaft. Durch die steigenden Anforderungen im Rahmen der Elektromobilität, steigen auch die Anforderungen an Grenzwerte für die EMV (Elektro Magnetische Verträglichkeit) bei niederfrequenten magnetischen Feldern. Gerade bei den hohen Strömen der elektrischen Maschinen eines Traktionsantriebs eines Elektromobils entstehen solche sehr großen magnetischen Felder. Induktive Lösungen sind anfällig hinsichtlich EMV. Die hierin vorgeschlagene kapazitive Lösung stellt eine Verbesserung der Robustheit gegen magnetische Felder sowie eine einfachere und damit kostengünstigere Lösung bereit.

Aufgrund der unterschiedlichen Permittivität des ersten Dielektrikums und des zweiten Dielektrikums kann der mindestens eine erste Rotorflügel von dem mindestens einen zweiten Rotorflügel und/oder dem mindestens einen Freiraum unterschieden werden. Gemäß einem möglichen Ausführungsbeispiel ist es denkbar, dass beispielsweise nur ein einziger erster Rotorflügel existiert. Dieser einzige erste Rotorflügel kann von den anderen Rotorflügeln des mindestens einen Rotors oder von dem mindestens einen Freiraum unterschieden werden. Von der Auswerteeinheit kann beispielsweise ermittelt werden, wenn der einzige erste Rotorflügel, ausgehend von der Referenzposition, eine vorbestimmte Drehposition erreicht, erreicht hat oder überschreitet. Die vorbestimmte Drehposition kann bei jeder Drehung identisch sein. Gemäß einem Beispiel kann es pro vollständiger Umdrehung eine einzige vorbestimmte Drehposition geben. Von der Auswerteeinheit kann beispielsweise ermittelt werden, wenn sich der einzige erste Rotorflügel jeweils um einen vorbestimmten Drehwinkel, z.B. um eine volle Umdrehung von 360°, bis zu der vorbestimmten Drehposition gedreht hat. Auf diese Weise kann beispielsweise jeweils eine volle Umdrehung des einzigen ersten Rotorflügels (d.h. eine Umdrehung um 360°) ermittelt werden. Gemäß einem weiteren Beispiel kann es pro vollständiger Umdrehung mehrere vorbestimmte Drehpositionen geben. Von der Auswerteeinheit kann beispielsweise ermittelt werden, wenn sich der einzige erste Rotorflügel jeweils um einen vorbestimmten Drehwinkel, z.B. um ein Drehwinkelsegment von beispielsweise 40°, bis zu der vorbestimmten Drehposition gedreht hat. Auf diese Weise kann beispielsweise jeweils eine Umdrehung des einzigen ersten Rotorflügels um ein bestimmtes Drehwinkelsegment (z.B. eine Umdrehung um 40°) ermittelt werden.

Die Auswerteeinheit kann ausgebildet sein, ein Schaltsignal zu erzeugen, wenn der mindestens eine erste Rotorflügel die vorbestimmte Drehposition erreicht, erreicht hat oder überschreitet. Die Auswerteeinheit kann ausgebildet sein, ein Schaltsignal zu erzeugen, wenn sie feststellt, dass der mindestens eine erste Rotorflügel die vorbestimmte Drehposition erreicht, erreicht hat oder überschreitet. Bei dem Schaltsignal kann es sich um ein logisches Schaltsignal handeln, welches über eine elektronische digitale Schnittstelle zusammen mit weiteren Sensor- oder Diagnosedaten übertragen werden kann. Bei jeder Erzeugung eines Schaltsignals kann beispielsweise ein Zähler richtungsabhängig z.B. um 1 erhöht oder vermindert werden. Auf diese Weise kann eine Art Indexierung erreicht werden. Mit Hilfe derartiger Indexierungen ist es möglich, auf eine absolute Bestimmung des Lenkwinkels über den Messbereich von typischerweise 1440° mittels Winkelsensoren und Getriebe Untersetzungen zu verzichten. Vielmehr wird mittels der Indexierung eine Art kontaktloser Schalter oder Zähler hinzugefügt, der beispielsweise im Falle des Geradeausfahrens und/oder bei Erreichen der vorbestimmten Drehposition ein Schaltsignal (Indexsignal/Index-Signal) erzeugt. Die Positionserfassungsvorrichtung kann daher auch als eine Art Schalter angesehen und beispielsweise als Schalter bezeichnet werden. Sofern ein Winkelsensor an der Lenkung einen Lenkwinkelteilbereich eindeutig erfasst, kann das richtungsabhängige Schaltsignal dazu verwendet werden, die Lenkwinkelteilbereiche zu zählen und so aus dem Zählerstand multipliziert mit dem Lenkwinkelteilbereich, addiert, um den Winkel innerhalb des Lenkwinkelteilbereichs eine eindeutige Herleitung auf einen Gesamtmessbereich zu erzielen. Hierbei wird für eine wählbare Ausführung zum Beispiel ein Teilbereich durch die Anzahl der Flügel des Rotors von beispielsweise 9 vorgegeben, wodurch der eindeutig zu messende Lenkwinkelteilbereich zu 360° / 9 = 40° entsteht.

Bisherige Ausführungen eines solchen Indexschalters sind magnetisch, bedingen einen zusätzlichen Magneten und einen zusätzlichen integrierten Schaltkreis. Die hierin vorgestellte kapazitive Lösung ist robuster bezüglich der Beeinflussung durch Fremdfelder.

Beispielsweise kann der Zähler jeweils um 1 erhöht oder vermindert werden, wenn der mindestens eine erste Rotorflügel ein vorgegebenes Drehwinkelsegment als die vorbestimmte Drehposition erreicht, erreicht hat und richtungsbewertet überschreitet. Auf diese Weise kann das Erreichen oder Überschreiten bestimmter Drehwinkelsegmente, z.B. von 40°, gezählt werden. Aus dem Zählerstand kann dann entsprechend der Drehwinkel abgeleitet werden, ohne den Drehwinkel selbst ermitteln zu müssen. Beträgt der Winkelteilbereich beispielsweise 40°, d.h. wird jeweils bei Erreichen eines Drehwinkelsegments von 40° der Zähler erhöht oder vermindert, so kann bei einem Zählerstand von 4 bei vorgegebener Richtung ein Drehwinkel von 4*40°=160° abgeleitet werden.

Gemäß einem Beispiel kann mit Hilfe der Auswerteeinheit ein Indexschalter realisiert sein, die Auswerteeinheit kann in einem solchen Indexschalter angeordnet sein oder der Drehwinkelsensor kann als solch ein Indexschalter realisiert sein. Der Indexschalter kann beispielsweise bei Geradeauslauf der Lenkung angebracht sein. Es kann angenommen werden, dass sich normalerweisse auf Straßen Rechts- und Linkskurven abwechseln sollten. Ist dann der Geradeauslauf als Indexpunkt gefunden und plausibilisiert, können insbesondere die Überschläge des Motorpositionssensors zur Kommutierung dieses Motors oder das Überstreichen der bestimmten Winkelsegmente, beispielsweise 40° Segmente, eines Drehwinkelsensors gezählt werden.

Bei den aus dem Stand der Technik bekannten Drehmomentsensoren mit magnetischer Jalousie wird, wie oben beschrieben, kein Lenkwinkel bei der magnetischen Jalousie erfasst. Ein Zählen von Winkelsegmenten/Winkelteilabschnitten nach Indexierung ist hiernach nicht möglich. Daher scheinen ein Index-Schalter und ein Zähler eigentlich unnötig zu sein. Jedoch sind auch in diesem Zusammenhang ein Index-Schalter und ein zugehöriger Zähler vorteilhaft, da zur Ansteuerung des Elektromotors der Servolenkung und zur Kommutierung dessen ein weiterer Positionssensor an diesem Motor implementiert ist. Aufgrund der Getriebeübersetzung des Lenkgetriebes von ca. 20..30 repitiert das Sensorsignal zwar recht häufig, kann aber nach Indexierung gezählt werden. Auf diese Weise kann (sozusagen indirekt) auf einen Winkelsensorwert für den Lenkwinkel geschlossen werden.

Der mindestens eine Rotor kann ein Metall aufweisen. Beispielsweise können der Grundkörper und/oder der mindestens eine Rotorflügel des mindestens einen Rotors ein Metall aufweisen. Gemäß einem ersten denkbaren Ausführungsbeispiel können der Rotorkörper und/oder der mindestens eine Rotorflügel des mindestens einen Rotors aus Metall bestehen.

Das erste Dielektrikum kann einen Kunststoff aufweisen oder als ein Kunststoff ausgebildet sein. Das erste Dielektrikum kann den mindestens einen ersten Rotorflügel beispielsweise zumindest nahezu vollständig bedecken oder sogar erweitert überdecken. Das erste Dielektrikum kann beispielsweise an dem mindesten einen ersten Rotorflügel angebracht, angeordnet oder damit verbunden sein. Das zweite Dielektrikum kann einen Kunststoff aufweisen oder als ein Kunststoff ausgebildet sein. Das zweite Dielektrikum kann den mindestens einen zweiten Rotorflügel beispielsweise zumindest nahezu vollständig bedecken oder sogar überdecken. Das zweite Dielektrikum kann beispielsweise an dem mindesten einen zweiten Rotorflügel angebracht, angeordnet oder damit verbunden sein. Alternativ kann das zweite Dielektrikum Luft aufweisen oder als Luft ausgebildet sein. Beispielsweise kann auf diese Weise der mindestens eine Freiraum gebildet sein. Unabhängig von der genauen Ausgestaltung des zweiten Dielektrikums ist die Permittivität des zweiten Dielektrikums verschieden von der Permittivität des ersten Dielektrikums. Beispielsweise kann die Permittivität des ersten Dielektrikums höher sein als die Permittivität des zweiten Dielektrikums. Dies kann beispielsweise dadurch erreicht werden, indem der für das erste Dielektrikum verwendete Kunststoff ein Kunststoff mit einer höheren Permittivität ist als der Kunststoff, der für das zweite Dielektrikum verwendet wird. Alternativ kann dies dadurch erreicht werden, indem der für das erste Dielektrikum verwendete Kunststoff ein Kunststoff mit einer höheren Permittivität als Luft ist, wenn Luft als zweites Dielektrikum verwendet wird.

Der mindestens eine Rotor kann jeweils einen Rotorträger aufweisen. Der Rotorträger kann ausgebildet sein, den Grundkörper des Rotors zu tragen. Der Rotorträger kann einen Kunststoff aufweisen. Beispielsweise kann der Rotorträger aus einem Kunststoff gebildet sein, d.h. aus einem Kunststoff bestehen. Gemäß einem denkbaren Ausführungsbeispiel kann der Rotorträger ein Mehrkomponenten-Kunststoffteil aufweisen. Beispielsweise kann der Rotorträger aus einem Mehrkomponenten-Kunststoffteil gebildet sein, d.h. aus einem Mehrkomponenten-Kunststoffteil bestehen.

Beispielsweise kann der als Mehrkomponenten-Kunststoffteil ausgebildete oder ein Mehrkomponenten-Kunststoffteil aufweisende mindestens eine Rotorträger mehrere Abschnitte oder Sektoren mit jeweils unterschiedlichen Kunststoffen aufweisen. Die mehreren Abschnitte oder Sektoren können das erste Dielektrikum und/oder das zweite Dielektrikum bilden. Beispielsweise kann das Mehrkomponenten-Kunststoffteil ein Zweikomponenten-Kunststoffteil aufweisen oder als Zweikomponenten-Kunststoffteil gebildet sein. Das Zweikomponenten-Kunststoffteil kann zwei Abschnitte oder Sektoren mit jeweils unterschiedlichen Kunststoffen aufweisen. Die zwei Abschnitte oder Sektoren können das erste Dielektrikum und/oder das zweite Dielektrikum bilden. Demgemäß kann das erste Dielektrikum einen Kunststoff aufweisen oder als ein Kunststoff ausgebildet sein. Das erste Dielektrikum kann den mindestens einen ersten Rotorflügel beispielsweise zumindest nahezu vollständig bedecken. Das erste Dielektrikum kann beispielsweise an dem mindesten einen ersten Rotorflügel angebracht, angeordnet oder damit verbunden sein oder es kann Teil des mindestens einen ersten Rotorflügels sein oder in den mindestens einen ersten Rotorflügel integriert sein. Das zweite Dielektrikum kann einen Kunststoff aufweisen oder als ein Kunststoff ausgebildet sein. Das zweite Dielektrikum kann den mindestens einen zweiten Rotorflügel beispielsweise zumindest nahezu vollständig bedecken. Das zweite Dielektrikum kann beispielsweise an dem mindesten einen zweiten Rotorflügel angebracht, angeordnet oder damit verbunden sein oder es kann Teil des mindestens einen zweiten Rotorflügels sein oder in den mindestens einen zweiten Rotorflügel integriert sein. Unabhängig von der genauen Ausgestaltung des zweiten Dielektrikums ist die Permittivität des zweiten Dielektrikums verschieden von der Permittivität des ersten Dielektrikums. Beispielsweise kann die Permittivität des ersten Dielektrikums höher sein als die Permittivität des zweiten Dielektrikums. Dies kann beispielsweise dadurch erreicht werden, indem der für das erste Dielektrikum verwendete Kunststoff ein Kunststoff mit einer höheren Permittivität ist als der Kunststoff, der für das zweite Dielektrikum verwendet wird. Beispielsweise kann ein Abschnitt oder Sektor, der das erste Dielektrikum bildet, einen Kunststoff aufweisen oder aus einem Kunststoff bestehen, dessen Permittivität höher ist als ein Kunststoff, der in dem Abschnitt oder Sektor vorhanden ist oder aus dem der Abschnitt oder Sektor besteht, der das zweite Dielektrikum bildet.

Der Rotorträger kann beispielsweise mindestens einen ersten kreissektorförmigen Abschnitt aufweisen. Der mindestens eine erste kreissektorförmige Abschnitt kann einen ersten Radius aufweisen und das erste Dielektrikum bilden. Der Rotorträger kann mindestens einen zweiten kreissektorförmigen Abschnitt aufweisen. Der mindestens eine zweite kreissektorförmige Abschnitt kann sich koaxial zu dem mindestens einen ersten kreissektorförmigen Abschnitt erstrecken. Der mindestens eine zweite kreissektorförmige Abschnitt kann einen zweiten Radius aufweisen und das zweite Dielektrikum bilden. Der zweite Radius kann kleiner sein als der erste Radius. Aufgrund des kleineren zweiten Radius bilden sich bei dem in radialer Richtung verlängert gedachten mindestens einen zweiten kreissektorförmigen Abschnitt kreissektorförmige Ausnehmungen oder Aussparungen.

Anders ausgedrückt kann der Rotor einen Rotorträger aufweisen. Der Rotorträger kann Sektoren aufweisen, welche das erste Dielektrikum bilden. Zusätzlich oder alternativ kann der Rotorträger Sektoren oder Aussparungen aufweisen, welche das zweite Dielektrikum bilden. Der Rotorträger kann derart ausgebildet sein, dass er mindestens einen ersten Sektor oder Abschnitt und mindestens einen zweiten Sektor oder Abschnitt aufweist. Der mindestens eine erste Sektor oder Abschnitt kann kreissektorförmig sein mit einem ersten Radius. Der mindestens eine zweite Sektor oder Abschnitt kann kreissektorförmig sein mit einem zweiten Radius. Der erste Radius kann größer als der zweite Radius sein. Der mindestens eine erste Sektor oder Abschnitt kann derart ausgebildet sein, dass er mit dem mindestens einen ersten Rotorflügel in Deckung ist oder den mindestens einen ersten Rotorflügel abdeckt oder überdeckt. Dadurch kann der mindestens eine Sektor oder Abschnitt zwischen dem mindestens einen ersten Rotorflügel und dem Stator liegen. Anders ausgedrückt, dadurch kann ein Kunststoff als erstes Dielektrikum zwischen dem mindestens einen ersten Rotorflügel und dem Stator liegen. Der mindestens eine zweite Sektor oder Abschnitt kann derart ausgebildet sein, dass er mindestens eine Aussparung aufweist, die mit dem mindestens einen zweiten Rotorflügel in Deckung ist. Dadurch kann die mindestens eine Aussparung zwischen dem mindestens einen zweiten Rotorflügel und dem Stator liegen. Anders ausgedrückt, dadurch kann Luft als zweites Dielektrikum zwischen dem mindestens einen zweiten Rotorflügel und dem Stator liegen. Beispielsweise kann hierdurch der mindestens eine Freiraum gebildet sein. Alternativ kann der mindestens eine zweite Sektor oder Abschnitt derart ausgebildet sein, dass er mit dem mindestens einen zweiten Rotorflügel in Deckung ist oder den mindestens einen zweiten Rotorflügel abdeckt. Dadurch kann der mindestens eine zweite Sektor zwischen dem mindestens einen zweiten Rotorflügel und dem Stator liegen. Anders ausgedrückt, dadurch kann ein Kunststoff als zweites Dielektrikum zwischen dem mindestens einen zweiten Rotorflügel und dem Stator liegen.

Zwischen mindestens einem dritten des mindestens einen Rotorflügels und dem mindestens einen Stator kann ein drittes Dielektrikum mit einer dritten Permittivität vorhanden sein. Es können ferner weitere Dielektrika zwischen den weiteren Rotorflügeln und dem Stator vorgesehen sein. Grundsätzlich können so viele verschiedene unterschiedliche Dielektrika vorgesehen sein wie Rotorflügel und/oder Freiräume vorhanden sind. Anders ausgedrückt, die Anzahl der verschiedenen Dielektrika kann von zwei reichen bis zu der Anzahl an Rotorflügeln beispielsweise plus mindestens einem Dielektrikum für etwaig vorhandene Freiräume.

Das drehende Element (das auch als Drehelement bezeichnet werden kann) kann einen Torsionsstab aufweisen oder als Torsionsstab ausgebildet sein. Der mindestens eine Stator und/oder die Auswerteeinheit kann/können auf einer Leiterplatte angeordnet sein. Das drehende Element kann sich durch die Leiterplatte und den mindestens einen Rotor erstrecken.

Gemäß einem zweiten Aspekt wird ein Drehwinkelsensor bereitgestellt. Der Drehwinkelsensor weist die Positionserfassungsvorrichtung auf, wie sie hierin beschrieben wurde/wird. Der Drehwinkelsensor weist ferner eine Drehwinkelermittlungsvorrichtung auf. Die Drehwinkelermittlungsvorrichtung weist den mindestens einen Stator, den mindestens einen Rotor und die Auswerteeinheit auf. Die Auswerteeinheit ist ausgebildet, ausgehend von der Referenzposition, einen Drehwinkel des mindestens einen Rotors relativ zu dem mindestens einen Stator zu ermitteln.

Gemäß dem zweiten Aspekt kann die Positionserfassungsvorrichtung gemäß dem ersten Aspekt mit eine Drehwinkelermittlung kombiniert werden. Beispielsweise kann ein kapazitiv arbeitender Indexschalter mit einer induktiv arbeitenden Drehwinkelermittlungsvorrichtung kombiniert werden.

Die Auswerteeinheit kann ausgebildet sein, den Drehwinkel des mindestens einen Rotors basierend auf einer induktiven Kopplung zwischen dem mindestens einen Rotor und dem mindestens einen Stator zu ermitteln. Die Auswerteeinheit kann beispielsweise als Zwischenergebnis den Drehwinkel des mindestens einen Rotors bis zu einer teilweisen oder vollständigen Umdrehung ermitteln. Ferner kann die Auswerteeinheit ausgebildet sein, den Wert des oben beschriebenen Zählers zu ermitteln. Der Wert des Zählers kann die Anzahl der teilweisen oder vollständigen Umdrehungen des mindestens einen Rotorflügels des Rotors angeben. Aus dem Zwischenergebnis (beispielsweise dem Drehwinkel bis zu 360°) sowie dem Wert des Zählers kann von der Auswerteeinheit die insgesamt erfolgte Drehung des Rotors ermittelt werden. Bei dem teilweisen Drehwinkel kann es sich z.B. um ein Winkelsegment handeln. Gemäß einem Beispiel können jeweils Überschreitungen eines jeweiligen Winkelsegments, d.h. Segmentüberschreitungen, gezählt werden. Bei dem Winkelsegment kann es sich beispielsweise um ein Winkelsegment von 20° oder 40° handeln, d.h. in diesem Fall wird jeweils nach Erreichen oder Überschreiten des Winkelsegments in Abhängigkeit der Richtung des Überschreitens von 20° oder 40° der Zähler erhöht oder vermindert. Insbesondere kann sich das Winkelsignal alle in bestimmten Abständen beispielsweise 20° oder 40° wiederholen und auf diese Weise kann auf beispielsweise einen Lenkwinkel von 1440° gerechnet werden.

In einem Ausführungsbeispiel kann der mindestens eine Rotor als zwei Rotoren ausgebildet sein. Die Auswerteeinheit kann ausgebildet sein, den Drehwinkel eines ersten der beiden Rotoren und den Drehwinkel eines zweiten der beiden Rotoren zu ermitteln. Die Auswerteeinheit kann ausgebildet sein, die gesamte Drehung des ersten der beiden Rotoren aus dem ermittelten Drehwinkel (bis zu einer vollständigen Umdrehung) sowie dem Wert des Zählers zu ermitteln. Die Auswerteeinheit kann ausgebildet sein, die gesamte Drehung des zweiten der beiden Rotoren aus dem ermittelten Drehwinkel (bis zu einer vollständigen Umdrehung) sowie dem Wert des Zählers zu ermitteln. Der erste Rotor kann an einem Ende des drehenden Elements angeordnet sein. Der zweite Rotor kann an einem anderen Ende des drehenden Elements angeordnet sein. Die Auswerteeinheit kann ausgebildet sein, aus dem Drehwinkel oder der gesamten Drehung des ersten Rotors und dem Drehwinkel oder der gesamten Drehung des zweiten Rotors das auf das drehende Element wirkende Drehmoment abzuleiten. Beispielsweise kann die Auswerteeinheit ausgebildet sein, einen Differenzwinkel zwischen dem Drehwinkel oder der gesamten Drehung des ersten Rotors und dem Drehwinkel oder der gesamten Drehung des zweiten Rotors zu ermitteln. Aus dem Differenzwinkel kann die Auswerteeinheit das auf das drehende Element wirkende Drehmoment abgeleitet werden.

Gemäß einem dritten Aspekt der Erfindung wird ein System vorgeschlagen. Das System weist einen Drehwinkelsensor auf, wie er hierin beschrieben wurde/wird. Das System weist ferner ein drehendes Element auf. Der mindestens einen Stator des Drehwinkelsensors ist ortsfest relativ zu dem drehenden Element angeordnet. Der mindestens eine Rotor ist drehfest mit dem drehenden Element verbunden. Die Auswerteeinheit des Drehwinkelsensors ist ausgebildet, aus dem ermittelten Drehwinkel oder der gesamten Drehung des mindestens einen Rotors ein auf das drehende Element einwirkendes Drehmoment zu ermitteln. Das drehende Element kann einen Torsionsstab aufweisen oder als ein Torsionsstab ausgebildet sein.

Die Auswerteeinheit kann ausgebildet sein, aus dem ermittelten Drehwinkel oder der gesamten Drehung des mindestens einen Rotors ein auf das drehende Element wirkendes Drehmoment zu ermitteln. Beispielsweise kann die Auswerteeinheit ausgebildet sein, das auf das drehende Element wirkende Drehmoment aus dem ermittelten Drehwinkel oder der gesamten Drehung des mindestens einen Rotors abzuleiten.

Der beschriebene Drehwinkelsensor und das beschriebene System kann/können ganz oder teilweise mit Hilfe eines Computerprogramms durchgeführt werden. So kann ein Computerprogrammprodukt mit Programmcodeabschnitten für das Ausführen des Verfahrens vorgesehen sein. Das Computerprogramm kann auf einem computerlesbaren Speichermedium oder in dem Drehwinkelsensor und/oder dem System, beispielsweise in der Auswerteeinheit, gespeichert sein. Wenn die Programmcodeabschnitte des Computerprogramms in einen Rechner, Computer oder Prozessor (beispielsweise einen Mikroprozessor, Mikrocontroller oder digitalen Signalprozessor (DSP), digitale festverdrahtete Logik in einem ASIC) geladen sind, oder auf einem Rechner, Computer oder Prozessor laufen, können sie den Computer oder Prozessor dazu veranlassen, einen oder mehrere Schritte oder alle Schritte der hierin beschriebenen Technik auszuführen.

Auch wenn einige der voranstehend beschriebenen Aspekte und Details in Bezug auf den Drehwinkelsensor beschrieben wurden, so können diese Aspekte auch in entsprechender Weise in dem System mit dem Drehwinkelsensor oder einem den Drehwinkelsensor unterstützenden Computerprogramm realisiert werden.

Die vorliegende Erfindung soll weiter anhand von Figuren erläutert werden. Diese Figuren zeigen schematisch:
- Figur 1: eine Explosionsdarstellung eines induktiven Drehmomentsensors aus dem Stand der Technik;
- Figur 2: eine schematische Darstellung einer mehrlagigen Leiterplatte;
- Figur 3a: eine Ansicht eines Rotors gemäß einem Ausführungsbeispiel;
- Figur 3b: eine weitere Ansicht des Rotors gemäß dem Ausführungsbeispiel aus Figur 3a; und
- Figur 3c: eine weitere Ansicht des Rotors gemäß dem Ausführungsbeispiel aus Figuren 3a und 3b.

Im Folgenden werden, ohne hierauf beschränkt zu sein, spezifische Details dargelegt, um ein vollständiges Verständnis der vorliegenden Erfindung zu liefern. Es ist einem Fachmann jedoch klar, dass die vorliegende Erfindung in anderen Ausführungsbeispielen verwendet werden kann, die von den nachfolgend dargelegten Details abweichen können.

Es ist dem Fachmann zudem klar, dass die nachfolgend dargelegten Erläuterungen unter Verwendung von Hardwareschaltungen, Softwaremitteln oder einer Kombination davon implementiert sein/werden können. Die Softwaremittel können im Zusammenhang stehen mit programmierten Mikroprozessoren oder einem allgemeinen Rechner, Computer, einer ASIC (Application Specific Integrated Circuit; zu Deutsch: anwendungsspezifische integrierte Schaltung) und/oder DSPs (Digital Signal Processors; zu Deutsch: digitalen Signalprozessoren). Es ist zudem klar, dass auch dann, wenn die nachfolgenden Details in Bezug auf ein Verfahren beschrieben werden, diese Details auch in einer geeigneten Vorrichtungseinheit, einem Computerprozessor oder einem mit einem Prozessor verbundenen Speicher realisiert sein können, wobei der Speicher mit einem oder mehreren Programmen versehen ist, die das Verfahren durchführen, wenn sie durch den Prozessor ausgeführt werden.

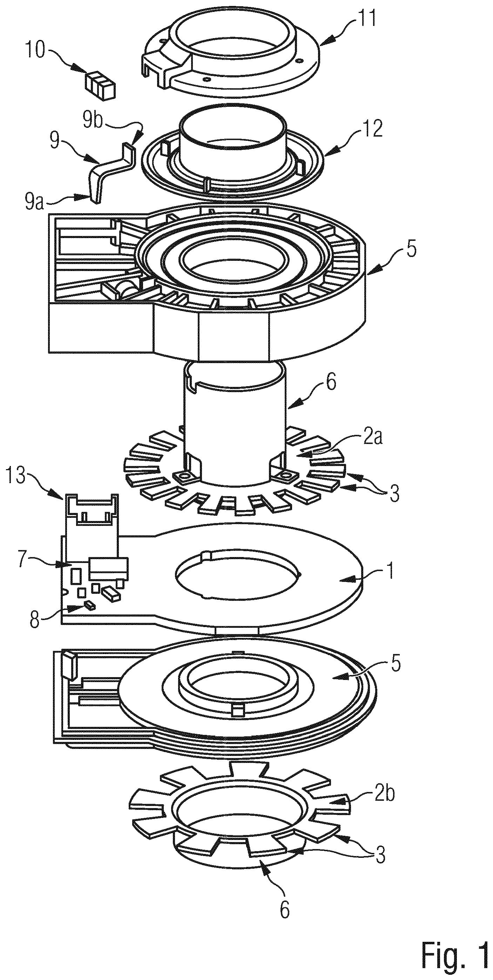

Figur 1 zeigt einen aus dem Stand der Technik bekannten induktiven Drehmomentsensor. Der induktive Drehmomentsensor umfasst eine Leiterplatte 1 und zwei Rotorscheiben 2 (oder kurz zwei Rotoren 2), wobei die Rotorscheiben 2 unterschiedliche Rotorstrukturen 3 mit Strukturgrößen von z.B. 20° beziehungsweise 40° aufweisen. Die Rotorscheiben 2 sind weitestgehend parallel und auf einer gemeinsamen Welle angeordnet, die hier durch einen Torsionsstab gebildet ist. Dieser ist hier Teil einer Lenkwelle. Die Rotorscheiben 2 sind mit kurzem Abstand zu beiden Hauptflächen der Leiterplatte 1 verteilt. Die Leiterplatte 1 und eine erste der Rotorscheiben 2a sind von einem Gehäuse 5 weitgehend dicht umgeben. Eine zweite der Rotorscheiben 2b ist außen mit minimalem Abstand an dem Gehäuse 5 gelagert. Die Rotorscheiben 2, die Leiterplatte 1 und das Gehäuse 5 weisen jeweils eine Öffnung für den Torsionsstab auf. Die Öffnungen sind entsprechend fluchtend.

Jede Rotorscheibe 2 ist mittels einer Trägerstruktur 6 drehfest an dem Torsionsstab befestigt, wobei dieser zwischen den Rotorscheiben 2 ein Torsionselement aufweist. Die einstückige Trägerstruktur 6 umfasst einen rohrstückartigen Teil, dessen Innendurchmesser dem Durchmesser eines zugehörigen Teils des Torsionsstabs zuzüglich einem vorbestimmten geringen Spiel entspricht und an dem die entsprechende Rotorscheibe 2a, 2b befestigt ist. Auf der Trägerstruktur 6 der ersten Rotorscheibe 2a, die in dem Gehäuse 5 angeordnet ist, ist von außen eine Scheibe 12 befestigt, die hier dicht an dem Gehäuse 5 anliegt. Auf diese Weise ist der Drehmomentsensor in sich gegen Verkippungen stabilisiert, wodurch diesbezügliche Messfehler minimiert werden.

Auf der Leiterplatte 1 sind vier Statoren ausgebildet, die in Verbindung mit den beiden Rotoren 2 vier Winkelsensoren bilden. Die Statoren sind zusammen mit erforderlichen Erregerstrukturen in bekannter Weise als Leiterbahnen auf den beiden Hauptflächen der Leiterplatte 1 aufgetragen und kontaktiert. Die Strukturen der Statoren sind mit den Strukturen der Rotorscheiben 2a, 2b abgestimmt.

Auf der Leiterplatte 1 ist weiterhin mindestens ein anwendungsspezifischer integrierter Schaltkreis (ASIC) 7 angeordnet. Jeder Schaltkreis 7 weist mindestens zwei Kanäle auf. Gegebenenfalls ist dem Schaltkreis 7 mindestens eine Auswerteeinheit nachgeschaltet. Der Schaltkreis 7 und gegebenenfalls die mindestens eine Auswerteeinheit bilden die Mittel zum Auswerten.

Zum elektrischen Anschluss an z.B. ein Steuergerät und gegebenenfalls an der Auswerteeinheit ist auf der Leiterplatte eine Steckbuchse 13 mit entsprechenden Kontaktstiften befestigt.

Im Betrieb werden die Rotoren 2 mittels des Torsionsstabs gegenüber den Statoren verdreht. Hierdurch werden entsprechende Signale in die Kanäle des Schaltkreises 7 geleitet und ausgehend von einer festgelegten Nullstellung zu Drehwinkeln berechnet. Abhängig von einem über ein Lenkrad auf die Lenkstange ausgeübten Drehmoment tordiert der Torsionsstab um einen bestimmten Winkel, so dass die beiden Rotoren 2 um entsprechend unterschiedliche Drehwinkel verdreht werden.

Aus diesen unterschiedlichen Drehwinkeln wird ein Differenzwinkel berechnet, aus dem das auf die Lenkstange ausgeübte Drehmoment bestimmt wird.

Weiterhin ist mittels eines Hallsensors 8, eines Permanentmagneten 10 und eines Flussleitblechs 9 eine Anzahl von ganzen Umdrehungen des Torsionsstabs bestimmbar: Sobald der Torsionsstab axial gedreht wird und der Permanentmagnet 10 die Referenzposition durchfährt, wird der Magnetfluss durch das Flussleitblech 9 zu dem Hallsensor 8 geleitet, der daraufhin ein Schaltsignal abgibt, das gezählt wird. Je nach Drehrichtung des Torsionsstabs wird für jedes Schaltsignal die Zahl 1 addiert oder subtrahiert; aus der Summe in Verbindung mit dem Signal der Drehwinkel ist eine tatsächliche Lenkwinkelstellung bestimmbar.

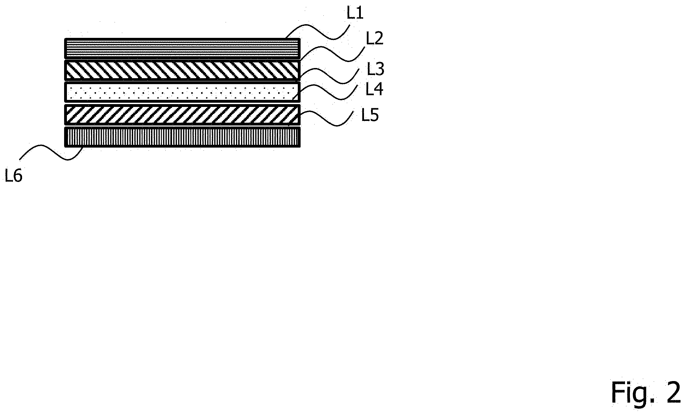

Jedes der Winkelerfassungsmittel weist neben dem Rotor, beispielsweise Rotor 2, auch einen Stator auf. Der Stator ist bei induktiven Sensoren auf dem Fachmann bekannte Weise aufgebaut und weist mindestens eine Erregerspule und mindestens eine Sensorspule auf. Der jeweilige Stator ist bei dem vorliegenden Ausführungsbeispiel auf einer einzigen mehrlagigen Leiterplatte 8 angeordnet, die in Fig. 2 exemplarisch dargestellt ist. Die mehrlagige Leiterplatte 8 weist insgesamt sechs Lagen auf, die in der Fig. 2 mit L1, L2, L3, L4, L5 und L6 bezeichnet sind. Die einzelnen Lagen L1 bis L6 sind auf Leiterplattenmaterial aufgebracht, das in der Fig. 2 zwecks einer besseren Übersichtlichkeit mittels voneinander abweichender Texturen symbolisiert ist. Der Stator des in der Fig. 1 teilweise dargestellten Winkelerfassungsmittels ist auf den Lagen L1 und L2 der Leiterplatte 8 angeordnet und der Stator des in Fig. 1 nicht dargestellten Winkelerfassungsmittels ist auf den Lagen L5 und L6 der Leiterplatte 8 angeordnet. Auf den Lagen L3 und L4 der Leiterplatte 8 ist zum einen das als induktiver Sensor ausgebildete Indexierungsmittel angeordnet. Zum anderen sind die Lagen L3 und L4 der Leiterplatte 8 zusätzlich als Abschirmung ausgebildet, mittels der eine ungewünschte Wechselwirkung zwischen den als induktive Sensoren ausgebildeten Winkelerfassungsmitteln zumindest reduziert ist, dessen Statoren auf den Lagen L1 und L2 sowie auf den Lagen L5 und L6 der Leiterplatte 8 angeordnet sind. In Fig. 2 sind lediglich die Lagen L1 bis L6 dargestellt, nicht aber die Statoren und das als induktiver Sensor ausgebildete Indexierungsmittel.

Heutige Drehmomentsensoren beruhen grundsätzlich auf den in Bezug auf Figuren 1 und 2 beschriebenen Prinzipien oder auf den ebenfalls oben skizzierten Prinzipen mit magnetischer Jalousie. Bestandteil einer modernen Servolenkung ist ein so genannter Torsionsstab, der sich bei dem Einbringen eines Drehmoments verdrillt. Die beiden Enden des Torsionsstabs werden oftmals als "Input-Shaft" und "Output-Shaft" (oder hierin auch als Eingangsseite und Ausgangsseite) bezeichnet. Bei heutigen Technologien, die teilweise auch als CIPOS-Strukturen bezeichnet werden, sind in einer mehrlagigen Leiterkarte (PCB = Printed Circuit Board), wie sie beispielsweise in Bezug auf Figur 2 beschrieben wurde, mehrere Messkanäle untergebracht. Insbesondere realisieren die Lagen L1, L2 Messkanäle, die den Winkel des "lnput-Shafts" messen, die Lagen L3, L4 sind Abschirmlagen und die Lagen L5, L6 beinhalten Messkanäle zum Messen des Winkels am "Output-Shaft". Die Differenz der Winkel am "Input-Shaft" und "Output-Shaft" gibt die Verdrillung des Torsionsstabs wieder und ist proportional dem Drehmoment, welches der Fahrer zum Lenken auf das Lenkrad ausübt.

Insbesondere sind CIPOS Sensoren so gestaltet, dass auf der "Input-Shaft" Seite (Eingangsseite) ein achtzehn-flügeliger CIPOS Sensor (IS) mit achtzehn-flügeligem Rotor (IS-R) mit einem Eindeutigkeitsbereich von 360°/18=20° ausgebildet ist und auf der "Output- Shaft" Seite (Ausgangsseite) ein neun-flügeliger Rotor (OS-R) mit einem absoluten Messbereich von 40° ausgebildet ist. Die Rotoren mit den neun (bzw. achtzehn) Flügeln sind unter anderem durch metallische Stanz-Biegeteile ausgestaltet oder es sind Kunststoffteile, die elektrisch leitende Flächen beinhalten oder es sind umspritzte Stanzteile.

Die in Bezug auf Figuren 1 und 2 beschriebenen Details beschreiben einen induktiv arbeitenden Drehwinkelsensor. Bei einem solchen Drehwinkelsensor ist es aufwändig, einen bestimmten Drehwinkel zu unterscheiden von einem um eine volle Umdrehung verdrehten Drehwinkel. Daher wurde daran gedacht, eine Indexierung zu verwenden, sobald eine volle Umdrehung erreicht wurde.

Hierfür wurde daran gedacht, die Flächen der Rotoren durch Freistellung zu modifizieren, um diese unterscheidbar zu machen. Durch die durch Freistellung modifizierten Flächen der Rotoren werden vollflächige Rotorflügel und Hohlflügel unterscheidbar. So kann beispielsweise ein modifizierter Flügel von den anderen Flügeln unterschieden werden und es kann eine Indexierung erfolgen, sobald der modifizierte Flügel sich um eine volle Umdrehung bewegt hat. Das heißt, der Rotor eines Winkelerfassungsmittels zur Erfassung einer Winkelstellung des sich drehenden Teils relativ zu einer Referenzposition dient zusätzlich der Indexierung bei einer vorher festgelegten Drehung, bevorzugt einer 360°-Drehung, des drehenden Teils relativ zu der Referenzposition mittels des Indexierungsmittels.

Der in Bezug auf Figuren 1 und 2 beschriebene induktive Sensor (CIPOS) nutzt vor allem die Außenkontur eines Flügels und nicht die Fläche selbst. Für die induktive Erfassung der Position (CIPOS) sind volle Flächen im Prinzip immer tendenziell negativ, da Wirbelströme sich frei ausgestalten können. Die Ausführung mit Hohl- und Vollflügeln stellen daher eine, wenn auch geringe, induktive Asymmetrie dar, die nachteilig für die Messung ist. Neue Realisierungen sind daher wünschenswert.

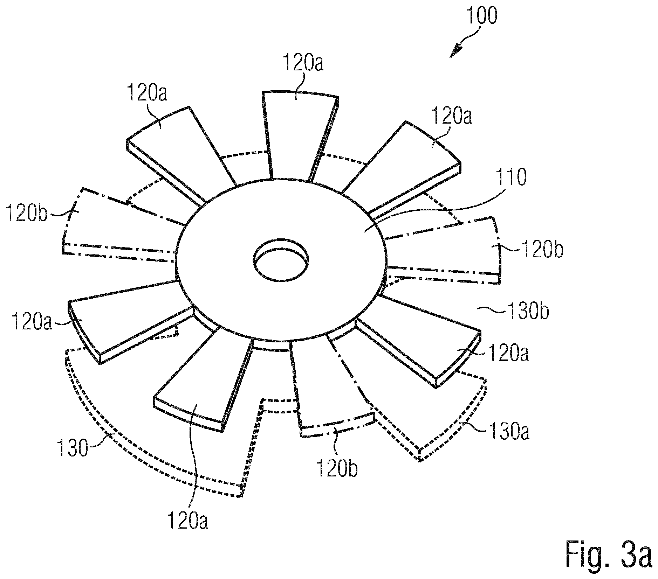

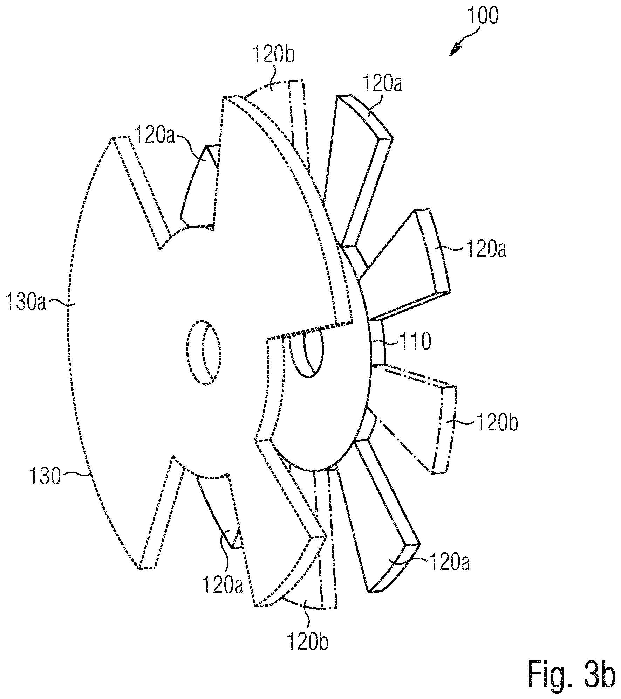

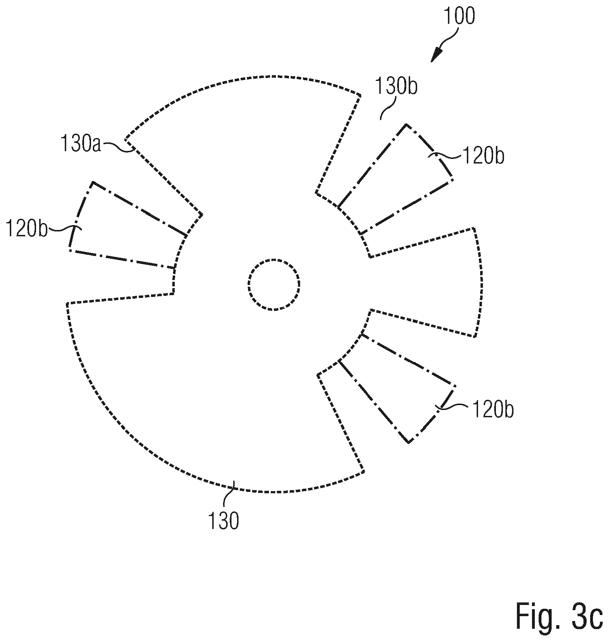

Figuren 3a bis 3c zeigen einen Rotor einer kapazitiv wirkenden Positionserfassungsvorrichtung und/oder eines Drehwinkelsensors mit einer solchen kapazitiv wirkenden Positionserfassungsvorrichtung. Der grundsätzliche Aufbau des Drehwinkelsensors kann dem grundsätzlichen Aufbau des induktiven Sensors aus Figur 1 entsprechen. Alternative Ausgestaltungen sind jedoch ebenfalls möglich, beispielsweise Drehmomentsensoren mit magnetischer Jalousie. Im Folgenden wird unter Bezugnahme auf die Figuren 3a bis 3c ein Aufbau des Rotors einer kapazitiv wirkenden Positionserfassungsvorrichtung und/oder eines Drehwinkelsensors mit einer solchen Positionserfassungsvorrichtung beschrieben.

Die kapazitiv wirkende Positionserfassungsvorrichtung weist mindestens einen Stator (in den Fig. 3a bis 3c nicht dargestellt), mindestens einen Rotor 100 und eine Auswerteeinheit auf. Der mindestens eine Stator ist ortsfest relativ zu einem drehenden Element anordenbar. Das heißt, bei einer Drehung des drehenden Elements dreht sich der Stator nicht mit, wenn er mit dem drehenden Element verbunden ist. Der mindestens eine Rotor 100 ist drehfest mit dem drehenden Element verbindbar. Das heißt, bei einer Drehung des drehenden Elements dreht sich der Rotor 100 mit, wenn er mit dem drehenden Element drehfest verbunden ist. Der mindestens eine Rotor 100 weist einen Grundkörper 110 und beispielhaft mehrere sich von dem Grundkörper 110 radial nach außen erstreckende Rotorflügel 120a, 120b auf (als Beispiel für mindestens einen Rotorflügel). Zwischen mindestens einem ersten Rotorflügel 120a der mehreren Rotorflügel und dem mindestens einen Stator ist ein erstes Dielektrikum mit einer ersten Permittivität vorhanden. Zwischen mindestens einem zweiten Rotorflügel 120b der mehreren Rotorflügel und dem mindestens einen Stator ist ein zweites Dielektrikum mit einer zweiten Permittivität vorhanden. Die erste Permittivität und die zweite Permittivität sind unterschiedlich voneinander. Die Auswerteeinheit ist ausgebildet, zu erfassen, wenn der mindestens eine erste Rotorflügel 120 eine vorbestimmte Drehposition erreicht, erreicht hat oder überschreitet.

Als drehendes Element wird im Folgenden ein Torsionsstab angenommen.

Der Rotor 100 der Figuren 3a bis 3c weist beispielhaft einen Rotorträger 130 auf. Der Rotorträger 130 ist ausgebildet, den Grundkörper 110 und damit die Rotorflügel 120a, 120b zu tragen und ist drehfest mit dem Grundkörper 110 and mit den Rotorflügeln 120a, 120b verbunden. Der Rotorträger 130 kann ein Metall aufweisen oder aus einem Metall gefertigt sein. Zusätzlich oder alternativ kann der Rotorträger 130 einen Kunststoff aufweisen oder aus einem Kunststoff gefertigt sein. In dem Beispiel aus Figuren 3a bis 3c besteht der Rotorträger 130 beispielhaft aus einem Kunststoff. Der Grundkörper 110 kann ein Metall aufweisen oder aus einem Metall gefertigt sein. Zusätzlich oder alternativ kann der Grundkörper 110 einen Kunststoff aufweisen oder aus einem Kunststoff gefertigt sein. In dem Beispiel aus Figuren 3a bis 3c besteht der Grundkörper 110 beispielhaft aus einem Metall. Die Rotorflügel 120a, 120b können ein Metall aufweisen oder aus einem Metall gefertigt sein. Zusätzlich oder alternativ können die Rotorflügel 120a, 120b einen Kunststoff aufweisen oder aus einem Kunststoff gefertigt sein. In dem Beispiel aus Figuren 3a bis 3c bestehen die Rotorflügel 120a, 120b beispielhaft aus einem Metall.

In dem Beispiel aus Figuren 3a bis 3c weist der Rotor 100 neun Rotorflügel 120a, 120b auf. Eine andere Anzahl von Rotorflügeln ist denkbar und möglich, beispielsweise achtzehn Rotorflügel für den Input-Shaft (für die Eingangsseite). Von den neun Rotorflügeln sind beispielhaft sechs als erste Rotorflügel 120a ausgebildet. Von den neun Rotorflügeln sind beispielhaft drei als zweite Rotorflügel 120b ausgebildet.

Das erste Dielektrikum kann einen Kunststoff aufweisen oder als ein Kunststoff ausgebildet sein. Das zweite Dielektrikum kann einen Kunststoff aufweisen oder als ein Kunststoff ausgebildet sein und/oder kann Luft aufweisen oder als Luft ausgebildet sein. In dem Beispiel aus Figuren 3a bis 3c ist das erste Dielektrikum beispielhaft aus einem Kunststoff gebildet und ist das zweite Dielektrikum beispielhaft aus Luft gebildet.

In dem Beispiel aus Figuren 3a bis 3c wird das erste Dielektrikum durch den Rotorträger 130 gebildet. Genauer gesagt ist der Rotorträger 130 derart ausgebildet, dass er erste Sektoren oder Abschnitte 130a und zweite Sektoren oder Abschnitte 130b aufweist. Die ersten Sektoren oder Abschnitte 130a sind kreissektorförmig mit einem ersten Radius. Die zweiten Sektoren oder Abschnitte 130b sind kreissektorförmig mit einem zweiten Radius. Der erste Radius ist größer als der zweite Radius. Die ersten Sektoren oder Abschnitte 130a sind derart ausgebildet, dass sie mit den ersten Rotorflügeln 120a in Deckung sind oder die ersten Rotorflügel 120a abdecken. Dadurch liegen die Sektoren 130a zwischen den ersten Rotorflügeln 120a und dem Stator. Anders ausgedrückt, liegt dadurch ein Kunststoff als erstes Dielektrikum zwischen den ersten Rotorflügeln 120a und dem Stator. Die zweiten Sektoren oder Abschnitte 130b sind aufgrund ihres kleineren Radius derart ausgebildet, dass Aussparungen entstehen, die mit den Rotorflügeln 120b in Deckung sind. Dadurch liegen die Aussparungen zwischen den zweiten Rotorflügeln 120b und dem Stator. Anders ausgedrückt liegt dadurch Luft als zweites Dielektrikum zwischen den zweiten Rotorflügeln 120b und dem Stator. In dem Beispiel aus Figuren 3a bis 3c ist die Permittivität des ersten Dielektrikums größer als die Permittivität von Luft.

Auch wenn dies in den Figuren 3a bis 3c nicht gezeigt ist, kann der Rotor 100 ferner mindestens einen dritten Rotorflügel aufweisen, wobei zwischen dem mindestens einen dritten Rotorflügel und dem mindestens einen Stator ein drittes Dielektrikum mit einer dritten Permittivität vorhanden ist.

Die Auswerteeinheit kann ausgebildet sein, zu erfassen, wenn zumindest einer der sechs ersten Rotorflügel 120a eine vorbestimmte Drehposition erreicht, erreicht hat oder überschreitet. Bei Erreichen oder Überschreiten der vorbestimmten Drehposition kann die Auswerteeinheit einen Zähler (z.B. um den Wert 1) erhöhen. Beispielsweise kann die Auswerteeinheit jedes Mal dann, wenn der zumindest eine der sechs ersten Rotorflügel 120a die vorbestimmte Drehposition erreicht, erreicht hat oder überschreitet, ein Schaltsignal erzeugen. Das Schaltsignal kann anzeigen, den Schalter zu erhöhen. Die vorbestimmte Drehposition kann beispielsweise einem Drehwinkelsegment entsprechen. Das Drehwinkelsegment kann beispielsweise einen Winkel von 20° oder 40° abdecken.

Gemäß einer nicht in den Figuren 3a bis 3c gezeigten Alternative kann beispielsweise lediglich ein einziger erster Rotorflügel 120a vorgesehen sein. In diesem Fall kann die Auswerteeinheit ausgebildet sein, zu erfassen, wenn der einzige erste Rotorflügel 120a die vorbestimmten Drehposition, z.B. 360°, erreicht, erreicht hat oder überschreitet. Wenn der einzige erste Rotorflügel 120a den vorbestimmten Drehwinkel erreicht, erreicht hat oder überschreitet, kann die Auswerteeinheit ein Schaltsignal zum Schalten des Zählers ausgeben. Dadurch können vorbestimmte Drehwinkel, wie teilweise oder vollständige Umdrehungen, gezählt/indexiert werden. Auf diese Weise kann beispielsweise das in Bezug auf Figur 2 beschriebene Indexierungsmittel (das auch als Indexierungskomponente oder Indexierungsvorrichtung bezeichnet werden kann) als kapazitiv wirkender Sensor realisiert werden.

Der mindestens eine Rotor kann als zwei Rotoren ausgebildet sein. Ein erster der beiden Rotoren kann an dem Input-Shaft (der Eingangsseite) und ein zweiter der zwei Rotoren kann an dem Output-Shaft (der Ausgangsseite) angeordnet sein. Die Auswerteeinheit kann den Drehwinkel oder die gesamte Drehung der beiden Rotoren ermitteln und die Differenz aus beiden Drehwinkeln oder beiden gesamten Drehungen bilden, um einen Differenzwinkel zu ermitteln. Aus dem Differenzwinkel kann die Auswerteeinheit ein auf den Torsionsstab wirkendes Drehmoment ermitteln.

Die in Bezug auf Figuren 3a bis 3c beschriebene Ausgestaltung dient sozusagen zur Realisierung eines kapazitiv wirkenden Schalters. Der kapazitiv wirkende Schalter kann kombiniert werden mit der induktiv wirkenden Drehwinkelermittlung, wie sie in Bezug auf Figur 1 beschrieben wurde. Beispielsweise kann die Auswerteeinheit den Drehwinkel des Rotors (bis zu einer vollständigen Umdrehung von 360°) unter Berücksichtigung von induktiver Kopplung ermitteln. Unter zusätzlicher Berücksichtigung des Werts des Zählers kann die insgesamt erfolgte Drehung des Rotors mit Werten von über 360° effizient ermittelt werden. Es wird sozusagen ein kapazitiv wirkender Schalter mit einer induktiven Drehwinkelermittlung kombiniert. Auf diese Weise kann eine induktiv arbeitende Drehwinkelermittlung bestmöglich mit einem kapazitiv wirkenden Schalter bei einer vorbestimmten Drehposition (beispielsweise bei 40° oder 360°) kombiniert werden. Das heißt, ein Einsatz des Schalters mit metallisch leitend ausgestalteten Flügeln als induktiver Positionssensor (CIPOS) ist möglich.

Gemäß einem Beispipel liegt der größte Eindeutigkeitsbereich auf der Seite der neun Rotorflügel und ist daher 360°/9=40°. In diesem Fall erkennt der Index-Schalter auch unter Plausibilisierung die Geradeausfahrt. Hiernach wird mittels des Zählers gezählt, sobald eine vorbestimmte Drehposition, beispielsweise ein Winkelsegment von 40° erreicht oder überschritten wird (d.h., es werden die Überklapper der 40° Spur gezählt). Der Lenkwinkel ist somit Lenkwinkel=n*40°+gemessener Winkel des Drehwinkelsensors (z.B. CIPOS) innerhalb des 40° Segments.

Anders ausgedrückt wird gemäß diesem Beispiel erfasst, wenn ein Winkelsegment (von z.B. 40°) erreicht oder überschritten wird. Sobald das Winkelsegment erreicht oder überschritten wird, wird in Abhängigkeit der Richtung der Überschreitung der Zähler erhöht oder vermindert. Dieser Zähler arbeitet kapazitiv. Wurden beispielsweise fünf Winkelsegmente erreicht oder überschritten, so kann anhand des Zählers ein ungefährer Drehwinkel von 5*40°=200° ermittelt werden. Anhand der induktiv arbeitenden Drehwinkelermittlungsvorrichtung kann der genaue Lenkwinkel ermittelt werden. Wird beispielsweise mit der Drehwinkelermittlungsvorrichtung ein Winkel von 12° ermittelt, so ergibt sich ein Lenkwinkel von 5*40°+12°=212°.

Das heißt, eine kapazitive Modulation für einen beispielsweise parallel zum induktiven Sensor arbeitenden kapazitiven Sensor oder Schalter wird dadurch erzielt, dass der Rotor so gestaltet wird, dass zwischen Rotor und Stator des Winkelsensors oder Winkel-Schalters eine Kodierung des Dielektrikums mittels mehrere verschiedener Dieleketrika vorgenommen wird. So können einzelne hervorzuhebende Flügel des Rotors mit einem Kunststoff einer möglichst hohen Dielektrizitätszahl/Dielektrizitätskonstante (Permittivität) hinterlegt werden, andere nicht zu kodierende Flügel sind nicht mit Kunststoff hinterlegt und hier wirkt elektrisch lediglich die Permittivität von Luft. Der so gestaltete Kunststoffkörper dient gleichzeitig als Träger der metallischen Rotorstruktur.

Alternativ kann ein Rotor aus einem Zweikomponenten(2K)-Kunststoffteil realisiert werden, bei dem einzelne Sektoren des Rotors mit Kunststoffen unterschiedlicher Permittivität realisiert werden. Neben 2K-Kunststoffteilen sind prinzipiell Kunststoffteile, beispielsweise Spritzteile, mit 3 bis n unterschiedlichen Kunststoffen vorstellbar.

## Patentansprüche

1. Positionserfassungsvorrichtung für einen Drehwinkelsensor, wobei die Positionserfassungsvorrichtung aufweist:
mindestens einen Stator;
mindestens einen Rotor (100), wobei der mindestens eine Rotor (100) einen Grundkörper (110) und mindestens einen sich von dem Grundkörper (110) radial nach außen erstreckenden Rotorflügel (120a, 120b) aufweist, wobei zwischen mindestens einem ersten (120a) des mindestens einen Rotorflügels (120a, 120b) und dem mindestens einen Stator ein erstes Dielektrikum mit einer ersten Permittivität vorhanden ist und zwischen mindestens einem zweiten Rotorflügel (120b) und dem mindestens einen Stator ein zweites Dielektrikum mit einer zweiten Permittivität vorhanden ist, wobei die erste Permittivität und die zweite Permittivität unterschiedlich voneinander sind;
eine Auswerteeinheit, die ausgebildet ist, zu erfassen, wenn der mindestens eine erste Rotorflügel (120a) eine vorbestimmte Drehposition erreicht, erreicht hat oder überschreitet.

2. Positionserfassungsvorrichtung für einen Drehwinkelsensor, wobei die Positionserfassungsvorrichtung aufweist:
mindestens einen Stator;
mindestens einen Rotor (100), wobei der mindestens eine Rotor (100) einen Grundkörper (110) und mindestens einen sich von dem Grundkörper (110) radial nach außen erstreckenden Rotorflügel (120a, 120b) aufweist, wobei zwischen mindestens einem ersten (120a) des mindestens einen Rotorflügels (120a, 120b) und dem mindestens einen Stator ein erstes Dielektrikum mit einer ersten Permittivität vorhanden ist und zwischen mindestens einem in Umfangsrichtung des Rotors (100) an den mindestens einen ersten Rotorflügel (120a) angrenzenden Freiraum und dem mindestens einen Stator ein zweites Dielektrikum mit einer zweiten Permittivität vorhanden ist, wobei die erste Permittivität und die zweite Permittivität unterschiedlich voneinander sind;
eine Auswerteeinheit, die ausgebildet ist, zu erfassen, wenn der mindestens eine erste Rotorflügel (120a) eine vorbestimmte Drehposition erreicht, erreicht hat oder überschreitet.

3. Positionserfassungsvorrichtung nach Anspruch 1 oder 2, wobei die Auswerteeinheit ausgebildet ist, basierend auf einer kapazitiven Kopplung zwischen dem mindestens einen Rotor (100) und dem mindestens einen Stator zu erfassen, wenn der mindestens eine erste Rotorflügel (120a), ausgehend von einer Referenzposition, eine vorbestimmte Drehposition erreicht, erreicht hat oder überschreitet.

4. Positionserfassungsvorrichtung nach Anspruch 1, 2 oder 3, wobei die Auswerteeinheit ausgebildet ist, ein Schaltsignal zu erzeugen, wenn der mindestens eine erste Rotorflügel (120a) die vorbestimmte Drehposition erreicht, erreicht hat oder überschreitet.

5. Positionserfassungsvorrichtung nach einem der Ansprüche 1 bis 4, wobei das erste Dielektrikum einen Kunststoff aufweist oder als ein Kunststoff ausgebildet ist.

6. Positionserfassungsvorrichtung nach einem der Ansprüche 1 bis 5, wobei das zweite Dielektrikum einen Kunststoff aufweist oder als ein Kunststoff ausgebildet ist, und/oder Luft aufweist oder als Luft ausgebildet ist.

7. Positionserfassungsvorrichtung nach einem der Ansprüche 1 bis 6, wobei der Rotor (100) einen Rotorträger (130) aufweist, der ausgebildet ist, den Grundkörper (110) des Rotors (100) zu tragen.

8. Positionserfassungsvorrichtung nach Anspruch 7, wobei der Rotorträger (130) einen Kunststoff aufweist oder aus einem Kunststoff gebildet ist, beispielsweise ein Mehrkomponenten-Kunststoffteil aufweist oder aus einem Mehrkomponenten-Kunststoffteil gebildet ist.

9. Positionserfassungsvorrichtung nach Anspruch 7 oder 8, wobei der Rotorträger (130) aufweist:
mindestens einen ersten kreissektorförmigen Abschnitt (130a), wobei der mindestens eine erste kreissektorförmige Abschnitt (130a) einen ersten Radius aufweist und das erste Dielektrikum bildet.

10. Positionserfassungsvorrichtung nach Anspruch 9, wobei der Rotorträger (130) aufweist:
mindestens einen zweiten kreissektorförmigen Abschnitt (130b), wobei der mindestens eine zweite kreissektorförmige Abschnitt (130b) einen zweiten Radius aufweist und das zweite Dielektrikum bildet, wobei der zweite Radius kleiner ist als der erste Radius.

11. Positionserfassungsvorrichtung nach einem der Ansprüche 1 bis 10, wobei zwischen mindestens einem dritten des mindestens einen Rotorflügels (120a, 120b) und dem mindestens einen Stator ein drittes Dielektrikum mit einer dritten Permittivität vorhanden ist.

12. Drehwinkelsensor aufweisend:
die Positionserfassungsvorrichtung nach einem der Ansprüche 1 bis 11;
eine Drehwinkelermittlungsvorrichtung aufweisend:
den mindestens einen Stator;
den mindestens einen Rotor (100);
die Auswerteeinheit, wobei die Auswerteeinheit ausgebildet ist, ausgehend von der Referenzposition, einen Drehwinkel des mindestens einen Rotors (100) relativ zu dem mindestens einen Stator zu ermitteln.

13. Drehwinkelsensor nach Anspruch 12,
wobei die Auswerteeinheit ausgebildet ist, den Drehwinkel des mindestens einen Rotors (100) basierend auf einer induktiven Kopplung zwischen dem mindestens einen Rotor (100) und dem mindestens einen Stator zu ermitteln.

14. System aufweisend einen Drehwinkelsensor nach Anspruch 12 oder 13 und ein drehendes Element, wobei der mindestens eine Stator des Drehwinkelsensors ortsfest relativ zu dem drehenden Element angeordnet ist und der mindestens eine Rotor (100) drehfest mit dem drehenden Element verbunden ist und die Auswerteeinheit des Drehwinkelsensors ausgebildet ist, aus dem ermittelten Drehwinkel des mindestens einen Rotors (100) ein auf das drehende Element einwirkendes Drehmoment zu ermitteln, wobei das drehende Element als Torsionsstab ausgebildet ist.

## Claims

1. Position sensing device for a rotational angle sensor, said position sensing device comprising:
at least one stator;
at least one rotor (100), with said at least one rotor (100) having a base body (110) and at least one rotor blade (120a, 120b) extending radially outwards from the base body (110), whereby a first dielectric with a first permittivity is present between at least one first blade (120a) of the at least one rotor blade (120a, 120b) and the at least one stator, and a second dielectric with a second permittivity is present between at least one second rotor blade (120b) and the at least one stator, whereby the first permittivity and the second permittivity are different from one another;
an evaluation unit designed to detect when the at least one first rotor blade (120a) reaches, has reached or exceeds a predetermined rotational position.

2. Position sensing device for a rotational angle sensor, said position sensing device comprising:
at least one stator;
at least one rotor (100), with said at least one rotor (100) having a base body (110) and at least one rotor blade (120a, 120b) extending radially outwards from the base body (110), whereby a first dielectric with a first permittivity is present between at least one first blade (120a) of the at least one rotor blade (120a, 120b) and the at least one stator, and a second dielectric with a second permittivity is present between at least one free space adjacent to the at least one first rotor blade (120a) in the circumferential direction of the rotor (100) and the at least one stator, whereby the first permittivity and the second permittivity are different from one another;
an evaluation unit designed to detect when the at least one first rotor blade (120a) reaches, has reached or exceeds a predetermined rotational position.

3. Position sensing device according to claim 1 or 2 in which the evaluation unit is designed to detect, based on a capacitive coupling between the at least one rotor (100) and the at least one stator, when the at least one first rotor blade (120a) reaches, has reached or exceeds a predetermined rotational position starting from a reference position.

4. Position sensing device according to claim 1, 2 or 3 in which the evaluation unit is designed to generate a switching signal when the at least one first rotor blade (120a) reaches, has reached, or exceeds the predetermined rotational position.

5. Position sensing device according to one of claims 1 to 4 in which the first dielectric comprises a plastic or is designed as a plastic.

6. Position sensing device according to one of claims 1 to 5 in which the second dielectric comprises a plastic or is designed as a plastic, and/or comprises air or is designed as air.

7. Position sensing device according to one of claims 1 to 6 in which the rotor (100) comprises a rotor carrier (130) designed to support the base body (110) of the rotor (100).

8. Position sensing device according to claim 7 in which the rotor carrier (130) comprises a plastic or is designed as a plastic, for example comprises a multi-component plastic part or is made from a multi-component plastic part.

9. Position sensing device according to claim 7 or 8 in which the rotor carrier (130) comprises:
at least one first circular segment-shaped section (130a), where the at least one first circular segment-shaped section (130a) has a first radius and forms the first dielectric.

10. Position sensing device according to claim 9 in which the rotor carrier (130) comprises:
at least one second circular segment-shaped section (130b), where the at least one second circular segment-shaped section (130b) has a second radius and forms the second dielectric, with the second radius being smaller than the first radius.

11. Position sensing device according to one of claims 1 to 10 in which a third dielectric with a third permittivity is present between at least one third of the at least one rotor blade (120a, 120b) and the at least one stator.

12. A rotational angle sensor comprising:
the position sensing device according to one of claims 1 to 11,
a rotational angle detection device comprising:
the at least one stator;
the at least one rotor (100);
the evaluation unit, said evaluation unit being designed to determine a rotational angle of the at least one rotor (100) relative to the at least one stator, starting from the reference position.

13. A rotational angle sensor according to claim 12,
in which the evaluation unit is designed to determine a rotational angle of the at least one rotor (100) on the basis of an inductive coupling between the at least one rotor (100) and the at least one stator.

14. A system comprising a rotational angle sensor according to claim 12 or 13 and a rotating element in which the at least one stator of the rotational angle sensor is arranged stationary relative to the rotating element and the at least one rotor (100) is connected in a rotationally fixed manner to the rotating element, and the evaluation unit of the rotational angle sensor is designed to determine a torque acting on the rotating element from the determined rotational angle of the at least one rotor (100), with said rotating element being designed as a torsion bar.

## Revendications

1. Dispositif de détection de position pour un capteur d'angle de rotation, le dispositif de détection de position comprenant:
au moins un stator;
au moins un rotor (100), un rotor (100) au moins comprenant un corps de base (110) et au moins une pale de rotor (120a, 120b) s'étendant radialement vers l'extérieur à partir du corps de base (110), **caractérisé en ce qu'**il y a, entre au moins une première (120a) d'une pale de rotor au moins (120a, 120b) et un stator au moins, un premier diélectrique avec une première permittivité et, entre au moins une deuxième pale de rotor (120b) et un stator au moins, un deuxième diélectrique avec une deuxième permittivité, la première permittivité et la deuxième permittivité étant différentes l'une de l'autre ;
une unité d'évaluation conçue pour détecter lorsqu'une première pale de rotor (120a) au moins atteint, a atteint ou dépasse une position de rotation prédéterminée.

2. Dispositif de détection de position pour un capteur d'angle de rotation, le dispositif de détection de position comprenant :
au moins un stator;
au moins un rotor (100), un rotor (100) au moins comprenant un corps de base (110) et au moins une pale de rotor (120a, 120b) s'étendant radialement vers l'extérieur à partir du corps de base (110), **caractérisé en ce qu'**il y a, entre au moins une première pale de rotor (120a) d'une pale de rotor au moins (120a, 120b) et un stator au moins, un premier diélectrique avec une première permittivité et, entre au moins un espace libre adjacent à la première pale de rotor (120a) au moins dans le sens de la circonférence du rotor (100) et un stator au moins, un deuxième diélectrique avec une deuxième permittivité, la première permittivité et la deuxième permittivité étant différentes l'une de l'autre;
une unité d'évaluation conçue pour détecter lorsqu'une première pale de rotor (120a) au moins atteint, a atteint ou dépasse une position de rotation prédéterminée.

3. Dispositif de détection de position selon la revendication 1 ou 2 dans lequel l'unité d'évaluation est conçue pour détecter, sur la base d'un couplage capacitif entre un rotor (100) au moins et un stator au moins, lorsqu'une première pale de rotor (120a) au moins atteint, a atteint ou dépasse une position de rotation prédéterminée à partir d'une position de référence.

4. Dispositif de détection de position selon la revendication 1, 2 ou 3 dans lequel l'unité d'évaluation est conçue pour générer un signal de commutation lorsqu'une première pale de rotor (120a) au moins atteint, a atteint ou dépasse la position de rotation prédéterminée.

5. Dispositif de détection de position selon l'une des revendications 1 à 4 dans lequel le premier diélectrique comprend une matière plastique ou est réalisé en matière plastique.

6. Dispositif de détection de position selon l'une des revendications 1 à 5 dans lequel le deuxième diélectrique comprend une matière plastique ou est réalisé en matière plastique et/ou comprend de l'air ou est réalisé avec de l'air.

7. Dispositif de détection de position selon l'une des revendications 1 à 6 dans lequel le rotor (100) comprend un support de rotor (130) conçu pour supporter le corps de base (110) du rotor (100).

8. Dispositif de détection de position selon la revendication 7 dans lequel le support de rotor (130) comprend une matière plastique ou est réalisé en matière plastique, comprend par exemple une pièce multicomposant en matière plastique ou est réalisé sous la forme d'une pièce multicomposant en matière plastique.

9. Dispositif de détection de position selon la revendication 7 ou 8 dans lequel le support de rotor (130) présente:
au moins une première section en forme de secteur circulaire (130a), une première section en forme de secteur circulaire (130a) au moins présentant un premier rayon et formant le premier diélectrique.

10. Dispositif de détection de position selon la revendication 9 dans lequel le support de rotor (130) présente :
au moins une deuxième section en forme de secteur circulaire (130b), une deuxième section en forme de secteur circulaire (130b) au moins présentant un deuxième rayon et formant le deuxième diélectrique, le deuxième rayon étant plus petit que le premier rayon.

11. Dispositif de détection de position selon l'une des revendications 1 à 10 dans lequel un troisième diélectrique présentant une troisième permittivité se trouve entre une troisième pale d'une pale de rotor (120a, 120b) au moins et un stator au moins.

12. Capteur d'angle de rotation comportant:
le dispositif de détection de position selon l'une des revendications 1 à 11; un dispositif de détection d'angle de rotation comportant:
au moins un stator;
au moins un rotor (100);
l'unité d'évaluation, celle-ci étant configurée pour déterminer, à partir d'une position de référence, un angle de rotation d'au moins un rotor (100) par rapport à au moins un stator.

13. Capteur d'angle de rotation selon la revendication 12,
l'unité d'évaluation étant configurée pour déterminer l'angle de rotation d'au moins un rotor (100) sur la base d'un couplage inductif entre au moins un rotor (100) et au moins un stator.

14. Système comportant un capteur d'angle de rotation selon la revendication 12 ou 13 et un élément rotatif, au moins un stator du capteur d'angle de rotation étant disposé de manière fixe par rapport à l'élément rotatif et au moins un rotor (100) étant relié de manière solidaire en rotation à l'élément rotatif et l'unité d'évaluation du capteur d'angle de rotation étant configurée pour déterminer un couple agissant sur l'élément rotatif à partir de l'angle de rotation déterminé d'au moins un rotor (100).
